# EUROPÄISCHE PATENTANMELDUNG

(11) **EP 1 925 922 A1**
(43) Veröffentlichungstag der Anmeldung: **28.05.2008**
(21) Anmeldenummer: 06124718.5
(22) Anmeldetag: 24.11.2006
(51) Int. Cl.: G01G 23/48

(54) **Temperierbare Mehrfachwägevorrichtung**

(71) Anmelder: Mettler-Toledo AG, 8606 Greifensee (CH)
(72) Erfinder: Emery, Jean-Christophe, 8005, Zürich (CH); Burkhard, Hans-Rudolf, 8492, Wila (CH)

(57) **Zusammenfassung**

Mehrfachwägevorrichtung mit einer Aufnahmestruktur (21) zur Aufnahme von mehreren in vorgegebener räumlicher Anordnung miteinander starr verbundenen, unabhängig voneinander betreibbaren Wägemodulen (22), wobei jedes Wägemodul (22) zumindest einen Lastaufnehmer (5) aufweist, dadurch gekennzeichnet, dass die Mehrfachwägevorrichtung ferner mit einer Temperiervorrichtung verbunden ist, welche thermisch mit jedem Wägemodul (22) verbunden ist.

## Beschreibung

Die Erfindung betrifft eine temperierbare Mehrfachwägevorrichtung zum Wiegen gleich gearteter Wägegüter.

Mehrfachwägevorrichtungen finden bevorzugt in automatisierten Produktions- und Testanlagen ihren Einsatz, wobei für eine Integration in diese Anlagen insbesondere Waagen in modularer Ausführung - so genannte Wägemodule - geeignet sind. Dabei handelt es sich im Wesentlichen um Waagen, bei denen die Anzeigeeinheit von der Waage getrennt angeordnet ist, beispielsweise in einer Anlage mit einer zentralen Anzeige für mehrere Wägemodule. Einsatzgebiete von solchen integrierten Wägemodulen sind Anlagen für die Produktion und Überprüfung von kleinen, relativ teueren Teilen, beispielsweise Abfüll- und Verpackungsmaschinen für Tabletten, Kapseln, Ampullen, etc. in der Pharmaindustrie, oder bei der Kontrolle von Kugellagern. Beim Wiegen gleich gearteter Wägegüter oder auch dem so genannten Batch-Wiegen handelt es sich um einen Vorgang bei dem mehrere Lasten individuell zu wiegen sind, sei dies zum Zwecke des Kontrollierens, des Dosierens oder des Abfüllens etc. auf engem Raum.

Derartige Vorrichtungen zum Wiegen gleich gearteter Wägegüter sind im Stand der Technik bekannt. Dabei handelt es sich vorwiegend um Reihen- oder Flächenanordnungen von Wägemodulen. Weitere Anordnungen stellen darauf ab, die Wägemodule in einer Flächenanordnung satellitenartig um eine Reihenanordnung von Lastträgern, welche an die Abstände der Zufuhrelemente einer vorhandenen Beschickungsvorrichtung anzupassen sind, zu platzieren.

Andere Vorrichtungen weisen kompakte Wägemodule auf, welche in einer gemeinsamen Aufnahmestruktur mit festen Abständen zueinander angeordnet sind, wobei der Abstand möglichst klein gehalten wird.

Die Wägeresultate sowie die Reproduzierbarkeit einer elektronische Waage bzw. eines Wägemoduls wird auch durch die Temperatur des Wägemoduls beeinflusst. Für reproduzierbare Wägungen ist es daher vorteilhaft, wenn jedes in einer Mehrfachwägevorrichtung angeordnetes Wägemodul eine im Wesentlichen gleichmässige Betriebstemperatur aufweist.

In einer Mehrfachwägevorrichtung kann es aufgrund des geringen räumlichen Abstands der einzelnen Wägemodule zueinander zu einer unvorteilhaften Temperaturverteilung innerhalb der Vorrichtung und damit zu einer Beeinflussung der Reproduzierbarkeit und der Wiederholbarkeit der Wägeergebnisse einzelner Wägemodule und/oder der gesamten Vorrichtung kommen.

Neben einer thermischen Beeinflussung der Wägemodule untereinander können auch Schwankungen in der Umgebungstemperatur, insbesondere unerwartete Temperaturspitzen, Einfluss auf die Nulllast, die Reproduzierbarkeit sowie andere Wägeparameter haben. Schwankungen in der Umgebungstemperatur können zum Beispiel in einer Produktion durch Maschinenstillstände, Klimaanlagen, Sonneneinstrahlung oder andere Faktoren ausgelöst werden. Gerade in einer Produktionsanlage ist jedoch die ständige Funktionsbereitschaft einer Waage, ohne lange Phasen der Anpassung an die Umgebungstemperatur, bei gleich bleibender Qualität der Messergebnisse entscheidend.

In der Wägetechnik sind verschiedene gekühlte Wägeräume für eine Waage bekannt. Die EP 1 396 711 B1 offenbart die Temperierung des Wägeraums einer Waage durch Ausnützung eines T-Gradienten, welcher sich entlang einer vertikalen Wand, welche ein Bestandteil des feststehenden Teils der Waage ist und mit einem thermoelektrischen Modul verbunden ist.

In der JP 2024518 A wird ebenfalls eine Waage mit Wägeraum offenbart, bei welcher im die Elektronik aufweisenden Gehäuseteil eine Heat Pipe angeordnet ist, welche entstehende Wärme aus dem Gehäuse nach aussen ableitet und so eine Erwärmung des Wägeraums durch Abwärme der Elektronik vermindert.

In der JP 2586115 B wird eine Waage offenbart, deren Wägeraum zur Vermeidung von Konvektionsströmung beim Öffnen des Windschutzes mittels eines im Waagengehäuse angeordneten thermoelektrischen Moduls temperiert wird. Dieses Modul befindet sich in thermischem Kontakt mit einer Kühlplatte, die entlang der Trennwand des Wägeraums vom Waagengehäuse, in welchem die Elektronik untergebracht ist, verläuft oder durch die Trennwand selbst repräsentiert ist. Ihr Zweck ist, die von der Wägeelektronik erzeugte Wärme vom Wägeraum abzuschirmen.

Diese Lösungen beziehen sich jedoch alle auf Waagen mit einer einzelnen Wägezelle, beispielsweise auf Analysenwaagen, die einen von einem Windschutz umgebenen Wägeraum aufweisen. Es wird in der Regel nur die in der Wägeelektronik entstehende Wärme abgeführt bzw. vom Wägeraum ferngehalten und weder eine Temperierung noch ein Abgleich mit der Umgebungstemperatur durchgeführt. Gerade eine Analysenwaage wird in der Regel in einer Umgebung eingesetzt, deren Umgebungsparameter weitestgehend konstant gehalten werden. In Fall einer Analysenwaage reicht es daher aus, die Waage mit einer gewissen Vorlaufzeit einzuschalten und zu warten, bis die Waage ihre Betriebstemperatur erreicht hat bzw. die Umgebungstemperatur angenommen hat.

In einer Mehrfachwägevorrichtung ist es hingegen von Vorteil, wenn zumindest während der Betriebsdauer die einzelnen Wägemodule eine ähnliche Betriebtemperatur aufweist und thermisch gegenüber der Umgebung stabilisiert ist.

Zur Gewährleistung der thermischen Stabilität der einzelnen Wägemodule einer Mehrfachwägevorrichtung sowie zur Verbesserung der Reproduzierbarkeit bzw. der Wiederholbarkeit der Messergebnisse jedes einzelnen Wägemoduls wird eine Mehrfachwägevorrichtung mit einer geeigneten Temperiervorrichtung verbunden, um auftretende Temperaturschwankungen auszugleichen. Eine Mehrfachwägevorrichtung weist eine Aufnahmestruktur zur Aufnahme von mehreren in vorgegebener räumlicher Anordnung miteinander starr verbundenen, unabhängig voneinander betreibbaren Wägemodulen auf. Jedes Wägemodul weist wiederum zumindest einen Lastaufnahmebereich und einen Lastaufnehmer auf. Die Mehrfachwägevorrichtung ist mit einer Temperiervorrichtung verbunden, welche wiederum thermisch mit jedem Wägemodul verbunden ist.

Die Mehrfachwägevorrichtung ist ferner mit einer Steuer- und/oder Regeleinheit verbunden, wobei die Steuer- und/oder Regeleinheit mit mindestens einem ersten Temperatursensor zur Erfassung der Umgebungstemperatur verbunden ist. Weiterhin ist der Mehrfachwägevorrichtung mindestens ein zweiter Temperatursensor zur Bestimmung mindestens einer zweiten der Mehrfachwägevorrichtung zugehörigen Temperatur zugeordnet. Die Steuer- und/oder Regeleinheit ist zur Ansteuerung und zum Abgleich der Kühl- und/oder Heizleistung der Temperiervorrichtung mit den gemessenen Temperaturen ausgebildet.

Weiterhin ist die Steuer-und/oder Regeleinheit für die Zuordnung eines Zeitwerts zu den gemessenen Temperaturwerten des ersten Temperatursensors und/oder des zweiten Temperatursensors ausgebildet.

Mit einer derart ausgestalteten Mehrfachwägevorrichtung ist es möglich die Betriebstemperatur der Mehrfachwägevorrichtung und/oder einzelner Wägemodule an die Umgebungstemperatur anzupassen und/oder die Betriebstemperatur nachzuregeln, so dass die einzelnen Wägemodule im Betrieb eine im Wesentlichen einheitliche Temperatur aufweisen, wodurch eine höherer Reproduzierbarkeit bzw. Wiederholbarkeit der Messungen der einzelnen Wägemodule erreicht werden kann.

Der zweite Temperatursensor kann direkt an der Aufnahmestruktur angeordnet sein. Bei Verwendung eines einzelnen zweiten Temperatursensors ist es vorteilhaft, wenn dieser im Wesentlichen mittig auf der Aufnahmestruktur angeordnet ist, da so die grösste Temperaturdifferenz mit der Umgebungstemperatur ermittelt werden und in die Temperaturregelung einfliessen kann.

In einem bevorzugten Ausführungsbeispiel können mehrere zweite Temperatursensoren an der Aufnahmestruktur angeordnet werden, so dass ein mehrdimensionales Temperaturprofil der Mehrfachwägvorrichtung als Funktion der Zeit ermittelt werden kann. Dies ist insbesondere dann vorteilhaft, wenn die Temperiervorrichtung eine unabhängige Temperaturregelung einzelner Wägemodule oder einer Gruppe von mehreren Wägemodulen ermöglicht.

Für eine individuelle Temperaturregelung der einzelnen Wägemodule ist es vorteilhaft, wenn jedem Wägemodul mindestens ein dritter Temperatursensor zugeordnet ist, welcher beispielsweise die Temperatur im inneren des Wägemoduls und/oder die Temperatur an dessen Kontaktfläche mit einem benachbarten Wägemodul erfassen kann.

Zur Ermittlung der Temperatur und/oder eines mehr-dimensionalen Temperaturprofils der Mehrfachwägevorrichtung können auch bereits werkseitig in den Wägemodulen angeordnete Temperatursensoren verwendet werden.

Die Temperatur der Mehrfachwägevorrichtung kann mittels einer gemeinsamen Temperiervorrichtung und/oder mittels einer mehrere Temperiermittel umfassenden Temperiervorrichtung reguliert werden. Ein Temperiermittel kann dabei mit einem einzelnen Wägemodul oder mit einer Gruppe von Wägemodulen thermisch verbunden sein. Die Temperiermittel einer Mehrfachwägevorrichtung bilden die Temperiervorrichtung, welche thermisch mit jedem Wägemodul der Mehrfachwägevorrichtung verbunden ist. Als Temperiermittel können Kühlelemente und/oder Heizelemente eingesetzt werden..

Bei der Verwendung mehrerer Temperiermittel ist es vorteilhaft, wenn diese unabhängig voneinander geregelt werden können, so dass auch Temperaturschwankungen innerhalb der Mehrfachwägevorrichtung und/oder zwischen benachbarten Wägemodulen erfasst und ausgeglichen werden können.

Zur Temperierung der Mehrfachwägevorrichtung kann mindestens eine Grundplatte der Aufnahmestruktur derart ausgestaltet sein, dass sie als Temperiermittel mindestens eine Leitung für ein Wärmeaustauschfluid aufweist. Die Leitung ist beispielsweise mäanderartig geformt und wirkt mit einem Thermostaten zusammen.

Das Temperiermittel kann beispielsweise als Heat Pipe, Peltierelement, luftgekühltes Element und/oder als mit einem Temperierfluid zusammenwirkendes Element ausgestaltet sein, wobei eine Temperiervorrichtung ein oder mehrere gleich und/oder verschiedenartige Temperiermittel aufweisen kann.

In einem weiteren Ausführungsbeispiel wird die Mehrfachwägevorrichtung von mindestens einem Gehäuseelement gegen die Umgebung abgeschirmt, wobei das Gehäuseelement vorzugsweise eine aktive und/oder passive thermische Isolation der Mehrfachwägevorrichtung darstellt. Eine thermische Entkopplung der Mehrfachwägevorrichtung von der Umgebung ist beispielsweise bei einem Einsatz in einer Produktionsanlage von Vorteil, da so der Einfluss von Temperaturschwankungen innerhalb der Produktionsanlage oder sogar innerhalb einer Produktionshalle minimiert werden können.

Bei diesem Ausführungsbeispiel bietet es sich an, den ersten Temperatursensor, welcher zur Erfassung der Umgebungstemperatur dient, an der Aussenseite des Gehäuseelements anzuordnen.

Ein Verfahren zum Temperieren einer Mehrfachwägevorrichtung weist mehrere Schritte auf. Die Mehrfachwägevorrichtung weist eine Aufnahmestruktur zur Aufnahme mehrerer in vorgegebener räumlicher Anordnung miteinander starr verbundener, unabhängig voneinander betreibbarer Wägemodule auf, wobei jedes Wägemodul einen Lastaufnahmebereich, einen Lastaufnehmer und ein Kraftkompensationssystem aufweist. Die Mehrfachwägevorrichtung ist mit einer Steuer- und/oder Regeleinheit, mit einer Temperiervorrichtung, die thermisch mit jedem Wägemodul verbunden ist, sowie mit mindestens einem ersten Temperatursensor verbunden. Weiterhin ist der Mehrfachwägevorrichtung mindestens ein zweiter Temperatursensor zugeordnet.

Zunächst wird eine erste Temperatur, die Umgebungstemperatur, mittels eines oder mehrerer ersten Temperatursensoren und der Steuer- und/oder Regeleinheit als Funktion der Zeit bestimmt. Ebenso wird mindestens eine zweite Temperatur der Mehrfachwägevorrichtung als Funktion der Zeit mittels eines oder mehrerer zweiten Temperatursensoren und der Steuer- und/oder Regeleinheit ermittelt.

Aus den gemessenen ersten und zweiten Temperatur-Zeit-Daten kann anschliessend eine Funktion ermittelt werden, welche eine mathematische Beziehung zwischen den gemessenen Temperaturen herstellt. Diese Funktion wird vorzugsweise in einem Programm oder einer Speichereinheit der Steuer- und/oder Regeleinheit abgelegt und dient dazu, die Heiz- und/oder Kühlleistung der Temperiervorrichtung mittels der Steuer- und/oder Regeleinheit zu kontrollieren und/oder zu regeln. Die Regelung kann derart erfolgen, dass die zweite Temperatur im Wesentlichen an die erste Temperatur angepasst wird oder dieser mit einem im Wesentlichen konstanten Offset folgt, indem die Heiz- und/oder Kühlleistung der Temperiervorrichtung mittels der Steuer- und/oder Regeleinheit anhand der ermittelten Funktion angepasst wird.

Ebenso ist es denkbar, dass eine empirisch oder theoretisch ermittelte Funktion die Heiz- und/oder Kühlleistung der Temperiervorrichtung regelt. So ist es beispielsweise denkbar, dass wiederkehrende zeitabhängige Temperaturphänomene, Tageszyklen und/oder Tag/Nachtzyklen, wie beispielsweise das Anfahrprofil einer Klimaanlage, als Basis für die Temperierung der Mehrfachwägevorrichtung herangezogen werden.

Je nach Einsatzgebiet der Mehrfachwägevorrichtung kann es für eine gleich bleibende Qualität der Wägeergebnisse ausreichend sein, vor Beginn eines Messzyklus zumindest die erste und die zweite Temperatur einmal zu ermitteln und anschliessend eine im Wesentliche gleichförmige Heiz- und/oder Kühlrate einzustellen. Für Einsatzgebiete in denen die Umgebungstemperatur stark schwankt oder plötzliche Temperaturspitzen auftreten können, bietet es sich an, die zuvor beschriebenen Schritte in festgelegten zeitlichen Abständen zu wiederholen und die Betriebstemperatur der Mehrfachwägevorrichtung anhand der ermittelten Funktion kontinuierlich oder zu festgelegten Zeitpunkten nachzuregeln.

Die ermittelte mathematische Funktion kann sowohl eine einfache Differenz zwischen einer aktuellen Umgebungstemperatur und einer aktuellen Temperatur der Mehrfachwägevorrichtung sein, als auch einen funktionellen, mathematischen Zusammenhang zwischen der aktuellen Umgebungstemperatur und den aktuellen Temperaturen eines oder mehrerer einzelner Wägemodule darstellen, so dass die Temperatur eines oder mehrerer einzelner Wägemodule unabhängig eingestellt und/oder reguliert wird. Weiterhin ist es möglich eine vorgegebene Funktion oder eine Solltemperatur in die Steuer- und/oder Regeleinheit einzuspeichern und diese zur Regelung der Heiz- und/oder Kühlrate der Temperiervorrichtung heranzuziehen.

Die zweiten und/oder dritten Temperatursensoren können auch zur Überprüfung der Temperatur der Mehrfachwägevorrichtung und/oder eines oder mehrerer Wägemodule herangezogen werden. Liegt die ermittelte Temperatur ausserhalb einer vorgegebenen Betriebstemperatur, so erzeugt die Steuer- und/oder Regeleinheit ein Warnsignal.

Idealerweise ist es möglich, dass mittels der Temperiervorrichtung alle Wägemodule auf eine im Wesentlichen einheitliche Betriebstemperatur eingeregelt werden, so dass sich ein im Wesentlichen gleichförmiges räumliches Temperaturprofil ausbildet.

Zudem ist es mit einer erfindungsgemässen Temperiervorrichtung auch möglich, die Mehrfachwägevorrichtung zu beheizen, um diese beispielsweise rasch auf eine im Wesentlichen konstante Betriebstemperatur zu bringen.

Mehrere Ausgestaltungen eine temperierbaren Mehrfachwägevorrichtung werden anhand der folgenden Figuren näher erläutert.
- Fig. 1: Vereinfachte dreidimensionale Darstellung einer Mehrfachwägevorrichtung für mehrere Wägemodule, welche mehrere Temperatursensoren aufweist und mit einer Steuer- und/oder Regeleinheit sowie einer luftgekühlten Temperiervorrichtung verbunden ist;
- Fig. 2: vereinfachte dreidimensionale, teilweise gebrochen dargestellte Ansicht einer Mehrfachwägevorrichtung für mehrere Wägemodule, wobei die Temperiervorrichtung Heat Pipes und luftgekühlte Elemente als Temperiermittel aufweist und jedes Wägemodul mit mindestens einem Temperiermittel verbunden ist;
- Fig. 3: Ausschnitt aus einer Mehrfachwägevorrichtung als vereinfachte dreidimensionale Darstellung, wobei die Wägevorrichtung mit einer Temperiervorrichtung verbunden ist, welche mit Kühlelementen verbundene Peltierelemente als Temperiermittel aufweist;
- Fig. 4: vereinfachte dreidimensionale Darstellung einer temperierbaren Mehrfachwägevorrichtung, welche mit einer Temperiervorrichtung verbunden ist, die mit Temperierfluid befüllte Wärmetauscher als Temperiermittel aufweist;
- Fig. 5: vereinfachte dreidimensionale, teilweise gebrochen dargestellte Ansicht einer Mehrfachwägevorrichtung mit einer Aufnahmestruktur für mehrere Wägemodule, wobei mindestens eine Teilstruktur der Aufnahmestruktur als Temperiermittel eine mäanderförmige Leitung für Temperierfluide aufweist;
- Fig. 6: vereinfachte dreidimensionale Darstellung einer temperierbaren Mehrfachwägevorrichtung für in mehreren Ebenen angeordneten Wägemodulen mit einer Temperiervorrichtung.

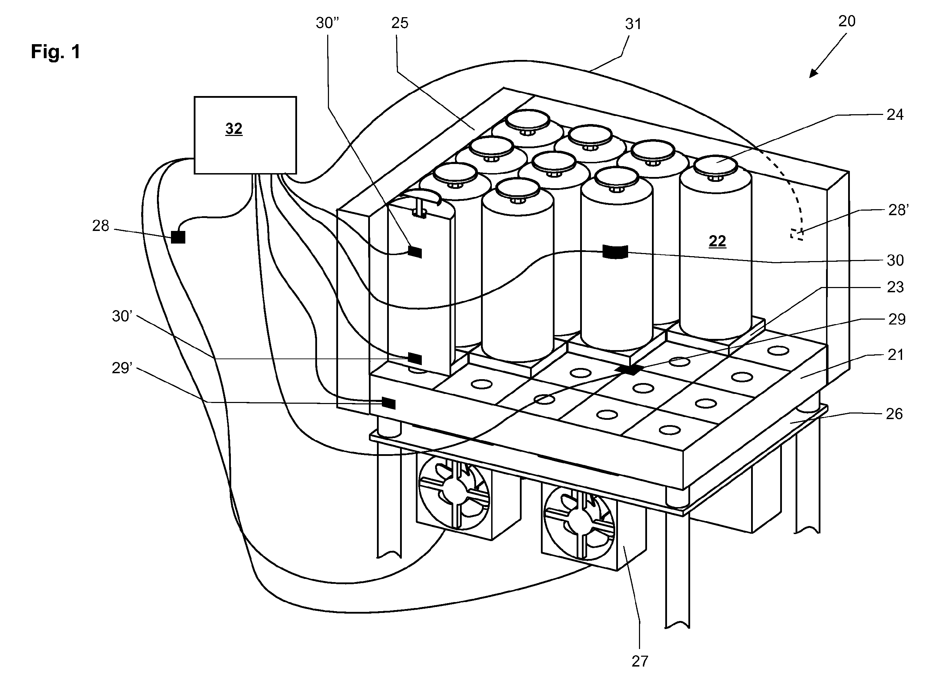

Figur 1 zeigt in einer vereinfachten Darstellung eine Mehrfachwägevorrichtung 20. Die Mehrfachwägevorrichtung 20 weist eine Aufnahmestruktur 21 für bis zu zwanzig Wägemodule 22 auf, von denen hier zehn zu sehen sind. Jedes Wägemodul 22 ist über eine Art Sockel 23 mit der Aufnahmestruktur 21 verbunden und weist einen Lastaufnehmer 24 auf. Der Lastaufnehmer 24 ist über ein geeignetes Gestänge mit einer im Wägemodul 22 angeordneten Wägezelle verbunden, welche hier nicht gezeigt ist. Wie in Figur 1 angedeutet, kann die Mehrfachwägevorrichtung 20 durch mindestens ein Gehäuseelement 25, von denen hier zwei zu sehen sind, insbesondere thermisch gegenüber der Umgebung isoliert werden. Es ist auch möglich, dass die Mehrfachwägevorrichtung 20 von allen Seiten mit Gehäuseelementen 25 umgeben ist. Die Gehäuseelemente 25 schützen die Mehrfachwägevorrichtung 20 gegen thermische Einflüsse ebenso wie beispielsweise gegen Verschmutzung. Im einfachsten Fall bestehen die Gehäuseelemente 25 aus einem isolierenden Material, ebenso ist es möglich die Gehäuseelemente 25 aktiv zu kühlen oder zu heizen. Dazu können ähnliche Mittel verwendet werden, wie sie im Folgenden zur Temperierung einer Mehrfachwägevorrichtung vorgestellt werden.

Unterhalb der Aufnahmestruktur 21 befindet sich eine weitere Trägerstruktur 26, an welcher mehrere Temperiermittel in Form von luftgekühlten Elementen 27 angeordnet sind. Die Trägerstruktur 26 ist derart mit der Aufnahmestruktur 21 verbunden, dass eine Übertragung von Erschütterungen von der Trägerstruktur 26 auf die Aufnahmestruktur 21 weitestgehend vermieden wird.

Als luftgekühlte Elemente 27 können beispielsweise kommerziell erhältliche CPU-Lüfter oder andere Kühler verwendet werden, wie es durch die Ventilatoren angedeutet ist. Die luftgekühlten Elemente 27 dienen vor allem dazu, die in der Mehrfachwägevorrichtung 20 entstehende Wärme nach aussen abzutransportieren.

Jedes luftgekühlte Element 27 ist mit der Steuer- und/oder Regeleinheit 32 verbunden, wobei eine Regelung der Temperatur der Mehrfachwägevorrichtung 20 vor allem durch eine Verlangsamung und/oder Beschleunigung der Rotorumdrehungen der luftgekühlten Elemente 27 erfolgt.

Zur Erfassung der Umgebungstemperatur sowie der Temperatur der Mehrfachwägevorrichtung 20 weist diese mindestens einen ersten Temperatursensor 28, 28' und mindestens einen zweiten Temperatursensor 29, 29' auf. Fernen kann mindestens ein dritter Temperatursensor 30, 30', 30" an der Mehrfachwägevorrichtung 20 angeordnet sein. Jeder Temperatursensor 28, 28', 29, 29', 30, 30', 30" ist über eine geeignete drahtgebundene oder drahtungebundene Verbindung 31 mit der Steuer-und/oder Regeleinheit 32 verbunden, wobei hier beispielhaft eine drahtgebundene Verbindung dargestellt ist.

Ein erster Temperatursensor 28 zur Erfassung der Umgebungstemperatur weist keinen thermischen Kontakt zur Mehrfachwägevorrichtung 20 auf. Alternativ oder zusätzlich kann ein weiterer erster Temperatursensor 28' zum Beispiel an der Aussenseite eines Gehäuseelements 25 angeordnet sein.

Der Zwischenraum zwischen der Aufnahmestruktur 21 und der Trägerstruktur 26 kann zudem als Kabelschacht genutzt werden, beispielsweise für die elektrischen Anschlüsse und Leitungen der einzelnen Wägemodule 22, der luftgekühlten Elemente 27 und/oder der Temperatursensoren 28, 28', 29, 29', 30, 30', 30".

An der Aufnahmestruktur 21 sind ein oder mehrere zweite Temperatursensoren 29, 29' zur Erfassung der Temperatur der Mehrfachwägevorrichtung 20 angeordnet. Die zweiten Temperatursensoren 29, 29' können an einer beliebigen Stelle der Aufnahmestruktur angeordnet werden. Die in etwa mittige Anordnung eines zweiten Temperatursensors 29 ist vorteilhaft, da aufgrund der in einer Wägemodulanordnung dicht aneinander angeordneten Wägemodule 22, dort die grösste Abweichung von der Umgebungstemperatur zu erwarten ist.

Weitere dritte Temperatursensoren 30, 30', 30" sind am und/oder in einem Wägemodul 22 angeordnet, wobei es möglich ist, sowohl Wägemodule 22 mit als auch ohne dritte Temperatursensoren 30, 30', 30" in der Aufnahmestruktur 21 anzuordnen.

Die Mehrfachwägevorrichtung 20 kann alle oder auch nur einen Teil der in Figur 1 gezeigten Temperatursensoren 28, 28', 29, 29', 30, 30', 30" aufweisen, solange sie mindestens einen ersten Temperatursensor 28, 28' zur Erfassung der Umgebungstemperatur und mindestens einen zweiten 29, 29' und/oder dritten 30, 30', 30" Temperatursensor zur Erfassung der Temperatur der Mehrfachwägevorrichtung 20 aufweist. Die Positionen der gezeigten Sensoren 28, 28', 29, 29', 30, 30', 30" sollen dabei eher beispielhaft verstanden werden. Eine erfindungsgemässe Mehrfachwägevorrichtung kann weitere und/oder an anderen Stellen angeordnete Sensoren aufweisen.

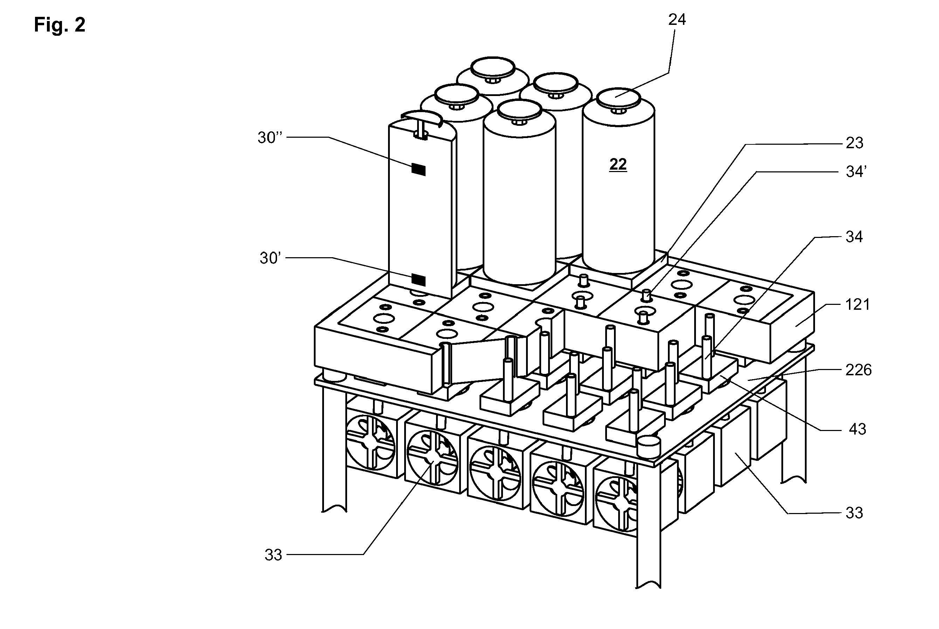

Figur 2 zeigt eine Mehrfachwägevorrichtung, bei der jedes Wägemodul 22 direkt mit einem separaten Temperiermittel, hier in Form von zwei Heat Pipes 34, 34', welche wiederum mit einem weiteren Temperiermittel in Form eines Kühlelements 33. Das Kühlelement 33 ist beispielhaft als Ventilator dargestellt, wobei auch andere bekannte Kühlelemente zur Wärmeableitung eingesetzt werden können. Die Heat Pipes 34, 34' sind über geeignete Befestigungssockel 43 an der Trägerstruktur 226 und/oder der Aufnahmestruktur 121 befestigt. Die Heat Pipes 34 können entweder nur in der Aufnahmestruktur 121 angeordnet sein oder wie es durch die Heat Pipes 34' in Figur 2 ebenfalls angedeutet ist, bis in die Wägemodule 22 hineinragen und in direktem thermischen Kontakt mit den Wägemodulen 22 stehen.

Die Heat Pipes 34, 34' und die Kühlelement 33 sind zu einer Temperiervorrichtung zusammengefasst, welche über eine hier nicht gezeigte Steuer- und/oder Regeleinheit (s. Figur 1) in Abhängigkeit der über die Temperatursensoren (s. a. Figur 1) erfassten Temperaturen gesteuert werden kann. In dem hier gezeigten Ausführungsbeispiel kann die Temperatur eines einzelnen Wägemoduls 22 über die direkt mit diesem verbundenen Heat Pipes 34, 34' und das Kühlmittel 33 separat angesteuert und geregelt werden. Auf diese Weise können sowohl äussere Temperatureinflüsse, als auch thermische Einflüsse zwischen den einzelnen Wägemodulen 22 im Wesentlichen ausgeglichen werden und ein im Betrieb im Wesentlichen gleichförmiges Temperatur-Zeit-Profil jedes einzelnen Wägemoduls 22 gewährleistet werden.

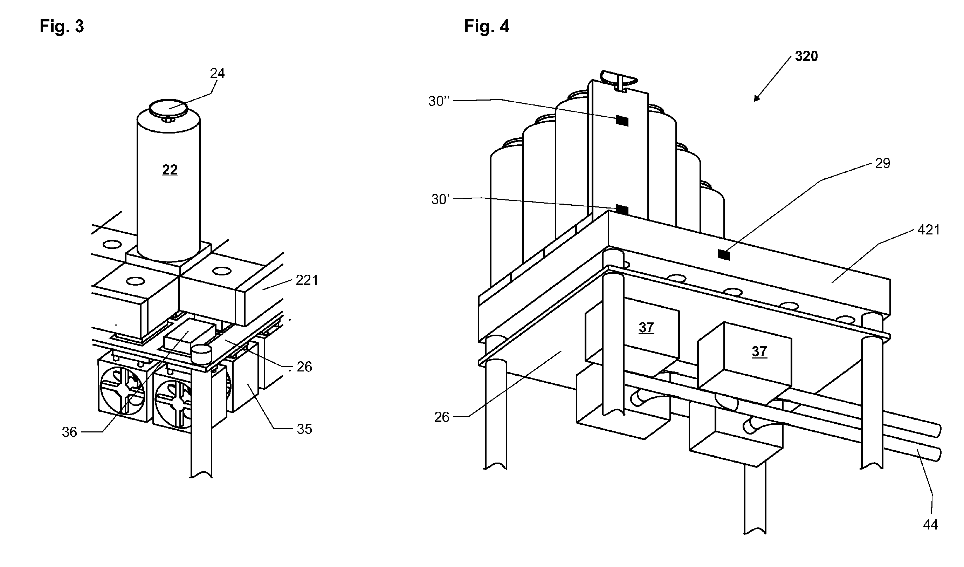

Eine weitere Variante einer Temperiervorrichtung ist in Figur 3 gezeigt, wobei Figur 3 nur einen Ausschnitt aus einer Mehrfachwägevorrichtung mit einer Aufnahmestruktur 221 zur Aufnahme von Wägemodulen 22 zeigt. Die Temperiervorrichtung weist Temperiermittel in Form von mit Kühlelementen 35 verbundenen Peltierelementen 36 auf. Die Temperaturregelung bzw. die Temperatureinstellung der einzelnen Wägemodule 22 erfolgt über die Peltierelemente 36 und die entstehende Wärme wird über die Kühlelemente 35 abgeführt. Wie hier gezeigt, kann jedem Wägemodul 22 ein Peltierelement 36 zugeordnet sein. Ebenso ist es möglich, dass ein Peltierelement 36 thermisch mit einer Gruppe von Wägemodulen 22 verbunden ist. Die Peltierelemente 36 sind zwischen den Kühlelementen 35 und der Trägerstruktur 221 angeordnet. Alle Peltierelemente 36 sowie alle Kühlelemente 35 sind mit der hier nicht gezeigten Steuer- und/oder Regeleinheit verbunden, welche die Kühl- und/oder Heizleistung der Temperiervorrichtung auf Basis der gemessenen Temperaturwerte steuert und regelt.

Figur 4 zeigt als weitere Ausführungsform eine fluidtemperierte Temperiervorrichtung. Die Mehrfachwägevorrichtung 320 ist mit mehreren fluidgefüllten Wärmetauschern 37 verbunden. Als Fluid kann beispielsweise Wasser oder andere bekannte flüssige oder gasförmige Wärmeaustauschfluid eingesetzt werden. Der Fluidaustausch sowie dessen Temperierung erfolgt über mit den Wärmetauschern 37 verbundenen Zu-und/oder Ableitungen 44, welche beispielsweise an einen geeigneten Thermostaten und/oder Kryostaten angeschlossen sind.

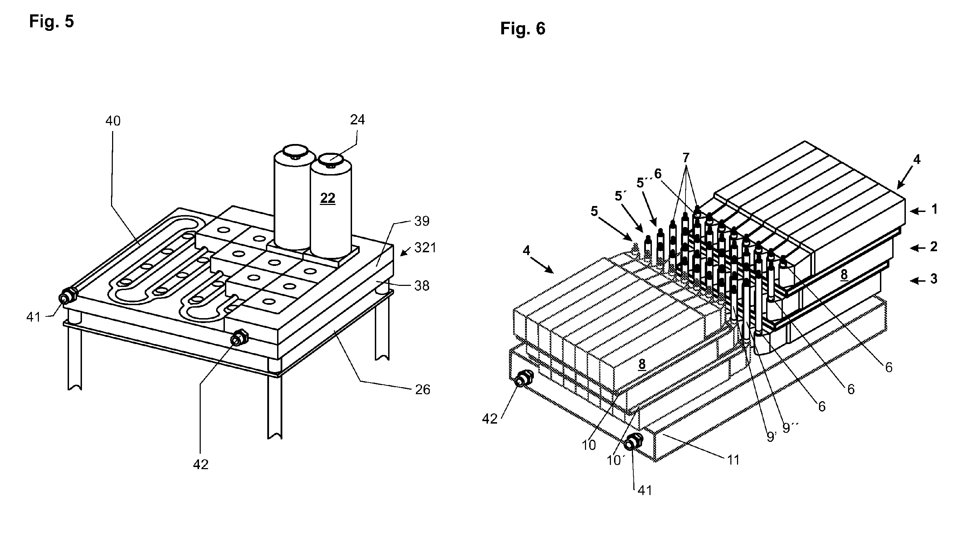

Neben der in Figur 4 gezeigten Temperiervorrichtung ist es auch möglich die Temperiervorrichtung in die Aufnahmestruktur 321 der Mehrfachwägevorrichtung zu integrieren, wie es in Figur 5 gezeigt ist. Die Aufnahmestruktur 321 ist zweiteilig ausgestaltet, wobei in mindestens einer der Teilstrukturen 38, 39 der Aufnahmestruktur 321 eine mäanderförmige Leitung 40 als Temperiermittel ausgebildet ist. Die Teilstrukturen 38,39 werden derart miteinander verbunden, dass die Leitung 40 abgedichtet wird und in der Leitung 40 befindliches Wärmetransferfluid nur über die beiden Anschlüsse 41, 42 in die Leitung 40 ein- oder austreten kann. Das Wärmeaustauschfluid wird durch einen externen Thermostaten und/oder Kryostaten (hier nicht gezeigt), welcher an die Anschlüsse 41, 42 angeschlossen wird, temperiert und beispielsweise mittels einer geeigneten Pumpe, welche Teil des Thermostaten und/oder Kryostaten sein kann, in der Leitung 40 zirkuliert. Die Leitung 40 ist mäanderartig ausgestaltet, wobei in Figur 5 beispielhaft eine mögliche Form gezeigt ist. Die Leitung 40 kann beliebig geformt sein.

Die in den Figuren 1 bis 5 gezeigten Temperiervorrichtungen können mittels der von den Temperatursensoren erfassten Temperaturwerten und der Steuer- und/oder Regeleinheit die Temperatur, das zeitliche und/oder räumliche Temperaturprofil der Mehrfachwägevorrichtung an eine Umgebungstemperatur oder selbstverständlich auch an eine beliebige vorgegebene Temperatur anpassen. In der Regel wird in einer Mehrfachwägevorrichtung während des Betriebs Wärme erzeugt, welche mittels der Temperiervorrichtung abgeführt werden soll. Prinzipiell ist es mit jeder der gezeigten Temperiervorrichtungen auch möglich eine Mehrfachwägevorrichtung zu erwärmen, sollte diese beispielsweise in einer Umgebung mit niedrigen Temperaturen eingesetzt werden.

Die vorgestellten Temperiervorrichtungen können mit beliebigen Mehrfachwägevorrichtungen verbunden werden. Eine Temperiervorrichtung kann dabei gleich- und/oder verschiedenartige Temperiermittel aufweisen, wobei die Temperiermittel als reine Kühlmittel, Heizmittel und/oder kombinierte Heiz/Kühlmittel ausgestaltet sein können. In den Figuren 1 bis 5 sind beispielhaft einige Temperiermittel gezeigt, wobei selbstverständlich auch andere bekannte Temperiermittel eingesetzt werden können.

In Figur 6 ist in dreidimensionaler Darstellung eine Mehrfachwägevorrichtung zum Wiegen gleichgearteter Wägegüter gezeigt, welche aus insgesamt achtundvierzig einzelnen Wägemodulen 4 aufgebaut ist. Diese sind in drei Ebenen 1, 2, 3 übereinander angeordnet und bilden in jeder Ebene 1, 2, 3 zwei Reihen aus parallel zueinander verlaufenden Wägemodulen 4, wobei die Wägemodule 4 der ersten Ebene 1 gegenüber denjenigen der zweiten Ebene 2 translatorisch, hier in Richtung der Längserstreckung eines Wägemoduls 4, versetzt sind. Ein hier gezeigtes Wägemodul 4 besitzt eine grosse Längsausdehnung im Vergleich zu seiner Breite.

Jedes Wägemodul weist einen Lastaufnehmer 5, 5', 5" auf, wobei die Lastaufnehmer 5, 5', 5" in regelmässigen Abständen zueinander angeordnet sind. Ein Lastaufnehmer 5, 5', 5" umfasst mindestens ein Kraftübertragungsgestänge sowie einen Lastträger, wobei der Lastträger vermittels eines hier nicht sichtbaren Kraftübertragungsgestänges mit dem Lastaufnahmebereich einer hier ebenfalls nicht gezeigten Wägezelle im Inneren des Gehäuses 8 eines jeden Wägemoduls 4 verbunden ist. Die Lastträger sind in der Figur 6 durch einen Aufsatzbolzen 7, sozusagen als Ende des Kraftübertragungsgestänges, angedeutet. Am Aufsatzbolzen 7 kann ein beliebiger Lastträger beziehungsweise eine beliebige Waagschale - sofern deren Abmessungen kleiner als der Abstand benachbarter Lastaufnehmer 5, 5', 5" ist -angebracht werden

Die mit den Wägemodulen der zweiten Ebene 2 und der dritten Ebene 3 verbundenen Lastaufnehmer 5', 5" sind gegenüber jenen der ersten Ebene 1 verlängert, so dass sämtliche Aufsatzbolzen 7 beziehungsweise auf diesen angebrachte Waagschalen, in einer zur Richtung der Schwerkraft orthogonalen Ebene angeordnet sind.

Die Wägemodule einer jeweiligen Reihe einer Ebene sind auf jeweils einer Trägerplattform 10, 10' befestigt. Dabei trennt die Trägerplattform 10 die erste Ebene 1 von der zweiten Ebene 2, beziehungsweise die Trägerplattform 10' die zweite Ebene 2 von der dritten Ebene 3. Eine hier durchgängig ausgestaltete Grundplatte 11 trägt den gesamten Aufbau der Vorrichtung zum Wiegen gleichgearteter Wägegüter. Die Trägerplattformen 10, 10' sind in bekannter, hier in der Figur 1 nicht näher ausgeführten Weise mit der Grundplatte 11 verbunden um der gesamten Vorrichtung zum Wiegen gleichgearteter Wägegüter die notwendige Stabilität zu verleihen.

Das Gehäuse 8 eines jeden Wägemoduls 4 verjüngt sich zum Lastaufnehmer 5, 5', 5" hin. Dies ermöglicht auch andere Anordnungen der Wägemodule 4 in Bezug auf eine Lastträgermatrix.

Jede der Trägerplattformen 10, 10' und/oder die Grundplatte 11 kann mit einer der in den Figuren 1 bis 5 gezeigten Temperiervorrichtungen verbunden werden, wobei sich insbesondere bei der hier gezeigten Mehrfachwägevorrichtung anbietet eine oder mehrere der Trägerplattformen 10, 10' und/oder wie hier beispielhaft die Grundplatte 11 mit einer mäanderförmigen Leitung für Wärmetransferfluide als Temperiermittel zu versehen, wie sie in Figur 5 gezeigt wurde. An der Grundplatte 11 sind zwei Anschlüsse 41, 42 zu sehen, welche mit einer mäanderförmigen Leitung innerhalb der Grundplatte 11 verbunden sind.

### Bezugszeichenliste

- 1: erste Ebene
- 2: zweite Ebene
- 3: dritte Ebene
- 4: Wägemodul
- 5, 5', 5": Lastaufnehmer
- 6: Basiselement
- 7: Aufsatzbolzen
- 8: Gehäuse des Wägemoduls
- 9, 9': Hülse
- 10, 10': Trägerplatte
- 11: Grundplatte
- 20, 320: Mehrfachwägevorrichtung
- 21, 121, 221, 321, 421: Aufnahmestruktur
- 22: Wägemodul
- 23: Sockel
- 24: Lastaufnehmer
- 25: Gehäuseelement
- 26: Trägerstruktur
- 27: luftgekühltes Element
- 28, 28': erster Temperatursensor
- 29, 29': zweiter Temperatursensor
- 30, 30', 30": dritter Temperatursensor
- 31: Verbindung
- 32: Steuer- und/oder Regeleinheit
- 33: luftgekühltes Element
- 34, 34': Heat Pipe
- 35: Kühlelement
- 36: Peltierelement
- 37: Wärmetauscher
- 38: Teilstruktur von 321
- 39: Teilstruktur von 321
- 40: Leitung
- 41: Anschluss
- 42: Anschluss
- 43: Befestigungssockel
- 44: Zu- und/oder Ableitung

## Patentansprüche

1. Mehrfachwägevorrichtung mit einer Aufnahmestruktur (21) zur Aufnahme von mehreren in vorgegebener räumlicher Anordnung miteinander starr verbundenen, unabhängig voneinander betreibbaren Wägemodulen (22), wobei jedes Wägemodul (22) zumindest einen Lastaufnehmer (5) aufweist, **dadurch gekennzeichnet, dass** die Mehrfachwägevorrichtung mit einer Temperiervorrichtung verbunden ist, welche thermisch mit jedem Wägemodul (22) verbunden ist.

2. Mehrfachwägevorrichtung nach Anspruch 1, **dadurch gekennzeichnet, dass** die Mehrfachwägevorrichtung mit einer Steuer- und/oder Regeleinheit (32) verbunden ist, welche mit mindestens einem ersten Temperatursensor (28) zur Erfassung der Umgebungstemperatur verbunden ist, und dass der Mehrfachwägevorrichtung mindestens ein zweiter Temperatursensor (29) zugeordnet ist, wobei die Steuer- und/oder Regeleinheit (32) zur Ansteuerung und zum Abgleich der Kühl- und/oder Heizleistung der Temperiervorrichtung mit den gemessenen Temperaturwerten des ersten Temperatursensors (28) und des zweiten Temperatursensors (29) ausgebildet ist.

3. Mehrfachwägevorrichtung nach einem der Ansprüche 1 oder 2, **dadurch gekennzeichnet, dass** die Steuer- und/oder Regeleinheit (32) für die Zuordnung der Zeit zu den gemessenen Temperaturwerten des ersten Temperatursensors (28) und des zweiten Temperatursensors (29) ausgebildet ist.

4. Mehrfachwägevorrichtung nach einem der Ansprüche 1 bis 3, **dadurch gekennzeichnet, dass** der zweite Temperatursensor (29') an der Aufnahmestruktur (21) angeordnet ist.

5. Mehrfachwägevorrichtung nach einem der Ansprüche 1 bis 4, **dadurch gekennzeichnet, dass** jedem Wägemodul (22) mindestens ein dritter Temperatursensor (30) zugeordnet ist.

6. Mehrfachwägevorrichtung nach einem der Ansprüche 1 bis 5, **dadurch gekennzeichnet, dass** die Temperiervorrichtung mehrere Temperiermittel (27) aufweist.

7. Mehrfachwägevorrichtung nach Anspruch 6, **dadurch gekennzeichnet, dass** ein oder mehrere Temperiermittel (27) getrennt voneinander regelbar sind.

8. Mehrfachwägevorrichtung nach einem der Ansprüche 1 bis 7, **dadurch gekennzeichnet, dass** die Aufnahmestruktur (321) eine Grundplatte (38, 39) aufweist, in der mindestens eine Leitung (40) für ein Wärmeaustauschfluid ausgebildet ist, welche mit der Temperiervorrichtung zusammenwirkt.

9. Mehrfachwägevorrichtung nach einem der Ansprüche 1 bis 7, **dadurch gekennzeichnet, dass** die Temperiervorrichtung mindestens eine Heat Pipe (34) als Temperiermittel aufweist.

10. Mehrfachwägevorrichtung nach einem der Ansprüche 1 bis 7, **dadurch gekennzeichnet, dass** die Temperiervorrichtung mindestens ein Peltierelement als Temperiermittel (36) aufweist.

11. Mehrfachwägevorrichtung nach einem der Ansprüche 1 bis 10, **dadurch gekennzeichnet, dass** die Temperiervorrichtung mindestens ein luft- und/oder fluidtemperiertes Element (27, 37) als Temperiermittel aufweist.

12. Mehrfachwägevorrichtung nach einem der Ansprüche 1 bis 11, **dadurch gekennzeichnet, dass** mindestens ein Gehäuseelement (25) die Mehrfachwägevorrichtung gegen die Umgebung abschirmt, wobei das Gehäuseelement (25) eine aktive oder passive thermische Isolation darstellt.

13. Mehrfachwägevorrichtung nach Anspruch 12, **dadurch gekennzeichnet, dass** der erste Temperatursensor (28') an der Aussenseite des mindestens einen Gehäuseelements (25) angeordnet ist.

14. Verfahren zum Temperieren einer Mehrfachwägevorrichtung mit einer Aufnahmestruktur zur Aufnahme mehrerer in vorgegebener räumlicher Anordnung miteinander starr verbundenen, unabhängig voneinander betreibbaren Wägemodulen, wobei jedes Wägemodul einen Lastaufnahmebereich und einen Lastaufnehmer aufweist, wobei die Mehrfachwägevorrichtung mit einer Steuer- und/oder Regeleinheit verbunden ist und ferner eine Temperiervorrichtung, die thermisch mit jedem Wägemodul verbunden ist, sowie mindestens einen ersten Temperatursensor aufweist, und der Mehrfachwägevorrichtung mindestens ein zweiter Temperatursensor zugeordnet ist, **dadurch gekennzeichnet, dass** das Verfahren die folgenden Schritte aufweist:
a. Messen einer ersten Temperatur der Umgebung als Funktion der Zeit mittels des ersten Temperatursensors und der Steuer- und/oder Regeleinheit;
b. Messen mindestens einer Temperatur der Mehrfachwägevorrichtung als Funktion der Zeit mittels der zweiten Temperatursensoren und der Steuer-und/oder Regeleinheit;
c. Ermitteln einer Funktion, welche eine mathematische Beziehung zwischen den gemessenen Temperaturen herstellt und der Kontrolle und/oder Regelung der Heiz- und/oder Kühlleistung der Temperiervorrichtung mittels der Steuer- und/oder Regeleinheit dient;
d. Anpassen der Heiz- und/oder Kühlleistung der Temperiervorrichtung mittels der Steuer- und/oder Regeleinheit anhand der ermittelten Funktion.

15. Verfahren nach Anspruch 14, **dadurch gekennzeichnet, dass** in Schritt b mittels der zweiten Temperatursensoren und der Steuer- und/oder Regeleinheit ein mehrdimensionales Temperaturprofil der Mehrfachwägevorrichtung als Funktion der Zeit gemessen wird.

16. Verfahren nach einem der Ansprüche 14 oder 15, **dadurch gekennzeichnet, dass** die Schritte a bis d in regelmässigen, vorgegebenen zeitlichen Abständen wiederholt werden.

17. Verfahren nach einem der Ansprüche 14 bis 16, **dadurch gekennzeichnet, dass** die Schritte a bis d kontinuierlich wiederholt werden, wenn sich die Mehrfachwägevorrichtung in einem betriebsbereiten Zustand befindet.

18. Verfahren nach einem der Ansprüche 14 bis 17, **dadurch gekennzeichnet, dass** jedem Wägemodul mindestens ein dritter Temperatursensor zugeordnet ist und die Temperatur jedes einzelnen Wägemoduls in Relation zur Umgebungstemperatur reguliert wird.

19. Verfahren nach einem der Ansprüche 142 bis 18, **dadurch gekennzeichnet, dass** mittels der Temperiervorrichtung alle Wägemodule auf eine im Wesentlichen einheitliche Betriebstemperatur eingeregelt werden, so dass sich ein im Wesentlichen gleichförmiges räumliches Temperaturprofil ausbildet.
